# EUROPEAN PATENT APPLICATION

(11) **EP 4 835 535 A1**
(43) Date of publication of application: **04.11.2026**
(21) Application number: 26168978.0
(22) Date of filing: 30.03.2026
(51) Int. Cl.: G02B 6/48, G02B 6/44

(54) **CLAMP FOR OPTICAL FIBER CABLE**

(30) Priority: 28.03.2025 IN 202511030029
(71) Applicant: HFCL Limited, New Delhi 110048 (IN)
(72) Inventor: DAS, Jyoti Prakash, New Delhi (IN); VERMA, Ashok Kumar, New Delhi (IN); M, Ashok Kumar, New Delhi (IN); PANWAR, Sourabh Singh, New Delhi (IN); VARMA, Ravi, New Delhi (IN)
(74) Representative: Office Freylinger

(57) **Abstract**

The present invention provides a clamp (100) for holding an optical fiber cable (116). The clamp (100) comprises a housing (106), at least a first segment (108) immovably affixed to the housing (106), at least a first cutting element (104) having a cutting edge, and at least a second segment (118) movably affixed to the first segment (108), comprised within the housing (106). When an external load on the optical fiber cable (116) exceeds a predetermined load, the cutting edge of the first cutting element (104) interacts with at least a part of the optical fiber cable (116) to sever the optical fiber cable (116).

## Description

### TECHNICAL FIELD

The present invention generally relates to the field of infrastructure for optical fibers, in particular, a clamp for aerial installation of optical fiber cable to mitigate damage to infrastructure.

### BACKGROUND OF THE INVENTION

This section is intended to provide information relating to the field of disclosure and thus, any approach or functionality described herein should not be assumed to qualify as prior art merely by its inclusion in this section.

The deployment of optical fiber cables for aerial installation utilizes existing poles for support. This approach is cost-effective and efficient, particularly for expanding telecommunication infrastructure. Additionally, in rural and suburban regions, as well as along railroad corridors, deploying optical fiber cable infrastructure in a cost-effective manner often involves using self-supporting aerial cables mounted on existing telephone or telegraph poles. This method is particularly advantageous for expanding telecommunication networks and improving connectivity. However, the installation of large, heavy cables necessitates thorough pole inspections, and in some cases, reinforcement or complete replacement of poles to ensure structural integrity.

Aerial optical fiber cables are inherently exposed to various external threats, including road accidents, falling trees, extreme weather events such as ice storms and high winds, and other unforeseen environmental factors. Given these vulnerabilities, deployment of optical fiber cables must be designed to minimize infrastructure damage, prevent human casualties, and reduce the impact on surrounding structures in the event of a failure.

To enhance resilience, aerial cables are typically engineered with high tensile strength and crush resistance, which help prevent breakage under normal and moderate stress conditions. However, in severe scenarios, if a cable fails to break, the excessive force on the cable can also result in damage to the infrastructure, i.e., the poles, which can be expensive, cause collateral damage, and take more time to repair, not excluding physical damage causes due to the weight of the pole as compared to the weight of the cable.

If the tensile strength of the optical fiber cable is low, it may lead to frequent and easy breakage of the optical cable, leading to costly repairs, and network disruptions. In contrast, if the tensile strength is too high, while the resilience of the cable will be improved, however, the cable resists breaking even under significant external forces such as strong winds, ice loading, or accidental pulls due to tree falls. In such cases, the stress is transferred to the supporting infrastructure, such as poles or mounting fixtures. This can result in structural damage to the poles, misalignment, or even collapse in extreme situations.

While attempts have been made to design new optical fiber cables which can withstand the external environment, however, such designs are expensive and not easy to implement.

There is, therefore, a need in the art to devise means to ensure that the integrity of the optical fiber cable is balanced with the need to ensure that the cable infrastructure, i.e., the poles, are not damaged when the external forces on the optical fiber cable exceed a certain limit, which may be detrimental to the structural integrity of the infrastructural support structures, such as poles.

In order to address the aforementioned limitations, the inventors hereby provide a novel clamp for aerial installation of optical fiber cables on poles, which ensures that the optical fiber cable is severed upon external force before the external force on the optical fiber cable damages the pole.

### SUMMARY OF THE INVENTION

This section is intended to introduce one or more aspects and/or embodiments of the present disclosure in a simplified form and is not intended to identify any key advantages or features of the present disclosure.

In an aspect of the present invention, there is a clamp for holding an optical fiber cable, the clamp comprising a housing; at least a first segment comprised within the housing, wherein the first segment is immovably affixed to the housing; at least a first cutting element, wherein at least a part of the first cutting element is affixed to the first segment; and at least a second segment comprised within the housing, wherein the second segment is moveably affixed to the first segment, or wherein the second segment is a compressible second segment configured to compress under a predetermined load, wherein the cutting edge of the first cutting element interacts with at least a part of the optical fiber cable to sever the optical fiber cable upon an external load on the optical fiber cable exceeding a predetermined load.

In an aspect of the present invention, the first cutting element is fixedly located in a lumen region defined between a first part of the second segment and a second part of the second segment, and wherein the first and second part of the second segment is adjacent to each other.

In an aspect of the present invention, the second segment is movably affixed to the first segment by at least a compressible member.

In an aspect of the present invention, the compressible member is a spring member.

In an aspect of the present invention, the compressible member has an equivalent spring constant (keq) in the range 45,000 N/m to 800,000 N/m.

In an aspect of the present invention, the compressible member is configured to move from an uncompressed position to at least a first compressed position when a load on the optical fiber cable is applied, such that the load does not exceed the predetermined value; wherein the compressible member is configured to move from the first compressed position to a second compressed position when the load on the optical fiber exceeds the predetermined value.

In an aspect of the present invention, the compressible second segment is made of a polymeric material.

In an aspect of the present invention, the predetermined load is in the range of 800 to 2000 N.

In an aspect of the present invention, the clamp comprises a mounting structure to mount the clamp to a pole.

In an aspect of the present invention, the clamp comprises at least a second cutting element having at least a cutting edge, wherein the cutting edge is located opposite to the cutting edge of the first cutting element, and wherein the second cutting element is movably affixed to the housing.

In an aspect of the present invention, the clamp comprises at least an inlet and at least an outlet to removably affix the optical fiber cable to the clamp.

In an aspect of the present invention, there is provided a clamp for holding an optical fiber cable, the clamp comprising: a housing; a segment comprised within the housing,; and at least a first cutting element, wherein at least a part of the first cutting element is affixed to the housing; wherein a cutting edge of the first cutting element is configured to interact with at least a part of the optical fiber cable to sever the optical fiber cable when the external load on the optical fiber cable exceeds a predetermined load.

In an aspect of the present invention, the segment is configured to move or compress relative to the first cutting element upon an external load on the optical fiber cable exceeding a predetermined load.

In an aspect of the present invention, the segment is a compressible segment configured to compress upon an external load on the optical fiber cable exceeding a predetermined load, wherein the compressible segment is configured to compress from a first resting uncompressed position to a second compressed position when the load on the optical fiber cable exceeds the predetermined load.

In an aspect of the present invention, the compressible segment is made of a polymeric material.

### BRIEF DESCRIPTION OF THE ACCOMPANYING DRAWINGS

The present disclosure, both as to its organization and manner of operation, together with further objects and advantages, may best be understood by reference to the description, taken in connection with the accompanying drawings. These and other details of the present disclosure will be described in connection with the accompanying drawings, which are furnished only by way of illustration and not in limitation of the scope of the present disclosure.
FIG. 1A illustrates a schematic view of a clamp for holding an optical fiber cable when the load on the optical fiber cable is less than a predetermined load, according an embodiment of the present invention.
FIG. 1B illustrates a schematic view of the clamp of FIG. 1A when the load on the optical fiber cable exceeds the predetermined load, according to an embodiment of the present invention.
FIG. 2A illustrates a schematic view of a clamp for an optical fiber cable with a compressible second element, when the load on the optical fiber cable is less than a predetermined load, according an embodiment of the present invention.
FIG. 2B illustrates a schematic view of the clamp of FIG. 2A when the load on the optical fiber cable exceeds the predetermined load, according an embodiment of the present invention.
FIG. 3 illustrates a schematic view of a clamp comprising a second cutting element, according to an embodiment of the present invention.
FIG. 4A illustrates a schematic view of a clamp for holding an optical fiber cable when the load on the optical fiber cable is less than a predetermined load, according to an embodiment of the present invention.
FIG. 4B illustrates a schematic view of the clamp of FIG. 4A when the load on the optical fiber cable exceeds the predetermined load, according to an embodiment of the present invention.

### DETAILED DESCRIPTION OF THE INVENTION

In the following description, for the purposes of explanation, various specific details are set forth in order to provide a thorough understanding of one or more embodiments of the present disclosure. It will be apparent, however, that embodiments of the present disclosure may be practiced without these specific details. Several features described hereafter may each be used independently of one another or in any combination with other features. An individual feature may not address any of the problems discussed above or may address only some of the problems discussed above. Some of the problems discussed above may not be fully addressed by any of the features described herein.

The present invention provides a clamp for holding an optical fiber cable. In general terms, the clamp is configured such that, during normal operation, it supports the optical fiber cable to be attached to a pole, or other fixed support. In an embodiment, the clamp comprises a mounting element configured to mount the clamp to a pole or other fixed support. In an embodiment, the clamp comprises a mounting element configured to mount the clamp to a pole, mast, wall, or other fixed support. In an embodiment, the clamp is mounted to the fixed support, and the optical fiber cable is routed through the clamp.

In an embodiment, when an external force causes the external load on the optical fiber cable to exceed a predetermined load, this load is transmitted from the cable to the clamp. In an embodiment, the external force can be a tensile, compressive, bending or shear force, or any combination thereof. In an embodiment, when an external load on the optical fiber cable exceeds a predetermined load amount, the clamp causes the optical fiber cable to be severed. The constructional features of the clamp may be varied such that the optical fiber cable is severed when the load acting on the optical fiber cable is greater than the predetermined load. In an embodiment, the predetermined load is in the range of 800 N to 2000 N.

The present invention discloses a clamp for holding an optical fiber cable, the clamp comprising a housing.

In an embodiment, the clamp comprises at least a first segment comprised within the housing. In an embodiment the first segment is immovably affixed to a base portion of the housing. In an embodiment, the first segment is a single segment. In another embodiment, the first segment comprises at least two or more discrete segments, collectively termed as the first segment. In an embodiment, each of the two or more discrete segments may be affixed to the housing. In an embodiment, each of the two or more discrete segments may be affixed to each other. In yet another embodiment, at least one of two or more discrete segments may be affixed to the housing and at least one of two or more discrete segment may be affixed to each other.

In an embodiment, the clamp comprises at least a first cutting element. In an embodiment, at least a part of the first cutting element is affixed to at least a part of the first segment. The first cutting element has at least a sharp edge, which is a cutting edge. The cutting edge is capable of severing the optical fiber cable.

In an embodiment, the clamp comprises at least a second segment comprised within the housing. In an embodiment, the clamp comprises a plurality of second segments. In an embodiment, the clamp comprises two second segments. In an embodiment, plurality of second segments is moveably affixed to the first segment. In an embodiment, the plurality of second segments moveably affixed to the first segment are incompressible second segments. In an embodiment, at least the second segment is a hemispherical or spherical segment having a through-hole, lumen region or channel configured to receive the cutting element. In an embodiment, the second segment has a cross-sectional profile that conforms, at least in part, to the shape of the housing. For example, the second segment may be formed as a hemispherical, spherical, pie-shaped, polygonal, or any specific non-circular structural base, depending on the manufacturing considerations and the dimensions of the optical fiber cable.

In another embodiment, the plurality of second segments is immovably affixed to the clamp housing. In an embodiment, the plurality of second segments immovably affixed to the clamp housing are compressible second segments. The compressible second segments are configured to compress in volume under a predetermined load amount.

In an embodiment the cutting edge of the first cutting element interacts with at least a part of the optical fiber cable to sever the optical fiber cable completely at the point of interaction upon an external load on the optical fiber cable exceeding a predetermined load amount. In an embodiment, the clamp comprises at least an inlet and at least an outlet, which are openings or passages integrally formed in the clamp housing. In an embodiment, the inlet and outlet are configured to guide the optical fiber cable into and out of the housing of the clamp for removably affixing the optical fiber cable to the clamp. In an implementation, after entering through the inlet, the optical fiber cable is routed inside the housing so as to loop at least once, or partially, around an internal portion of the clamp, thereby increasing the contact length between the cable and the clamp, inducing friction, and improving transfer of tensile load from the cable to the clamp, and then the cable exits the housing through the outlet. The cable may further proceed to another pole after exiting the outlet. In an embodiment, for a terminal or last pole, at least one end of the cable is fixed inside the clamp by a locking mechanism, thereby preventing slippage of the cable end while still allowing the cable to be severed at the predetermined load.

In an embodiment, the inlet or outlet shape is substantially circular. In an embodiment, the diameter of the inlet or outlet is in the range of 2 mm to 15 mm such that the one or more optical fiber cables can be received with appropriate clearance and installation tolerance.

In an embodiment, the clamp housing may have a cross-sectional shape selected from circular, semi-circular, polygonal, or any other suitable shapes, depending on installation requirements and manufacturing considerations. In an embodiment, the housing comprises at least a first channel and at least a second channel to removably affix at least an optical fiber cable to the clamp.

The clamp and its components are made of a material that has a suitable mechanical strength as well as environmental resistance. Examples of such materials of the clamp comprise, without limitation, polymeric materials such as Acrylonitrile Butadiene Styrene (ABS), Nylon, Polypropylene (PP), Hylum.

In an embodiment, the first segment is a base on which movable components of the clamp are mounted. In an embodiment, the first segment is configured as a lower base segment and is mounted on the base of the housing. In an embodiment, the first segment acts as a rigid, stationary foundational structure configured to guide and support the movable components of the clamp. In an embodiment, the first segment is made of a highly durable material possessing suitable mechanical strength to reliably withstand the external load without undergoing structural deformation or getting damaged before the optical fiber cable is severed. In an embodiment, the first segment is formed via manufacturing processes such as injection molding, extrusion, or casting. In an embodiment, the first segment has a cross-sectional profile that conforms, at least in part, to the shape of the housing. For example, the first segment may be formed as a circular, semi-circular, pie-shaped, polygonal, or any specific non-circular structural base, depending on the manufacturing considerations and the dimensions of the optical fiber cable.

In an embodiment, at least a part of a first cutting element is fixedly anchored to the first segment. In an embodiment, at least a part of the first cutting element is anchored directly into the base of the first segment during manufacturing. In an embodiment, at least a part of the first cutting element is mechanically fastened to a predefined mounting slot within the first segment.

In an embodiment, the second segment comprises a single or a plurality of second segments. In an embodiment, the second segments comprises two second segments. In an embodiment, the plurality of second segments may have the same shape and dimensions, or at least one of the plurality of second segments may have a shape and dimension different from at least one another second segment.

In an embodiment, a channel or a lumen region is defined by any two adjacent second segments. In an embodiment, the clamp comprises a single channel or lumen region. In an embodiment, the clamp may comprise two or more channel or lumen regions. The first cutting element is housed or located in the channel or lumen region as defined by any two adjacent second segments. In an embodiment, where the clamp comprises a single channel or lumen region, the clamp comprises a single first cutting element. In an embodiment, where the clamp comprises two or more channel or lumen regions, the clamp comprises more than one first cutting element.

In an embodiment, the cutting edge of the first cutting element extends into the channel or lumen region. In an embodiment, when the load on the optical fiber cable is less than the predefined load, the cutting edge of the first cutting element is recessed within the channel or lumen region of the second segment such that it does not engage or damage the optical fiber cable.

In an embodiment, the at least the two segments are movable relative to each other. In an embodiment, the second segment is moveably affixed to the first segment by at least a compressible member. In an embodiment, the second segment displaces relative to the first segment when the load on the optical fiber cable exceeds a predefined load. In a preferred embodiment, the compressible member is a spring. In an embodiment, multiple springs may be present to control the displacement of at least the second segment relative to the stationary first segment. In other embodiments, the compressible member may be made of any suitable elastic material.

In an embodiment, when the external load on the optical fiber cable is below a threshold value, the compressible member is in an uncompressed state, and the gap between the first segment and the second segment is maximum.

In an embodiment, when the external load on the optical fiber cable exceeds the threshold value but does not exceed the predetermined load amount, the incompressible second segment moves partially towards the first segment, such that the compressible member is compressed from the uncompressed state to a first compressed position, however, the cutting edge of the first cutting element does not interact with the optical fiber cable.

In an embodiment, when the external load on the optical fiber cable exceeds the predetermined load value, the incompressible second segment moves partially towards the first segment, such that the compressible member is compressed from the uncompressed state to a second compressed position, such that the cutting edge of the first cutting element interacts with the optical fiber cable to sever it completely.

In an embodiment, when the external load on the optical fiber cable exceeds the threshold value but does not exceed the predetermined load amount, the compressible second segment compresses from a first uncompressed state to a second compressed position, however, the cutting edge of the first cutting element does not interact with the optical fiber cable.

In an embodiment, when the external load on the optical fiber cable exceeds the predetermined load value, the compressible second segment compresses from a first uncompressed state to a third compressed position, such that the cutting edge of the first cutting element interacts with the optical fiber cable to sever it completely.

In an embodiment, the predetermined load amount is in the range of 800-2000N. It is understood by a person skilled in the art that the predetermined load amount will be based on the structural features of the optical fiber cable. In an embodiment, the predetermined load can be 800N. In an embodiment, the predetermined load can be 2000N. In another embodiment, the predetermined load can be any value between 800 and 2000N. In an embodiment, predetermined load tolerance can be ±10%. In another embodiment, the tolerance can be +5% or less. In an embodiment, the tolerance can be ≥5% and ≤ 10%. It is understood that the tolerance is not an essential or limiting feature of the invention. the predetermined load amount for a clamp is fixed. In another embodiment, the predetermined load amount for the clamp can be varied.

In an embodiment, the total stroke of the cutting edge relative to the cable path is in the range of about 0.95 mm to 10.5 mm. In an embodiment, when the external load on the optical fiber cable further exceeds the predetermined load amount, the second member may travel a distance in the range of 0.95 mm to 10.5 mm. A person skilled in the art would appreciate that the range of total stroke would vary based on the outer diameter of the optical fiber cable to be held in the clamp. The exemplary cable can have outer diameter in the range of 1 mm to 10 mm. The inventors have observed that the optical fiber cable need not be severed to the entirety of its cross section by the cutting edge to break it. In case when all the strength members and fibers of the cable are severed, the cable breaks apart due to the inherent load of the cable. Thus, minimum stroke required for breaking the cable would be less than the outer diameter of the cable.

In some implementations of the present invention, the compressible member is comprised of one or more springs such that an equivalent spring constant(k_{eq}) of all the springs is configured such that upon application of force in range of 800N to 2000N, the minimum stroke is in range of 0.95 mm to 10.5 mm.

A person skilled in the art would appreciate that the equivalent spring constant (keq) is the sum of the individual spring constants(k), calculated as below: ${k}_{eq} = {k}_{1} + {k}_{2} + … . {k}_{n} ;$ wherein, n is number of springs placed in parallel and all springs experience the same displacement, and total load is distributed among them.
In an embodiment, the number of springs (n) may vary in the range of 1 to 4. The spring constant k_{eq} is configured to be in the range of about 45,000 N/m to 800,000 N/m, to achieve the stroke (x) in range of 0.95mm t0 10.5mm, corresponding to force range of 800N to 2000N. A person skilled in the art can calculate the spring constant k using the formula: $k = F / x ,$ wherein F is force applied and x is displacement, which is substantially equivalent to the stroke.

In an embodiment, the first segment is made of a polymeric material which is substantially incompressible. In an embodiment, the first segment is made of a metal, metal alloy, ceramic, or mixture of any of a polymeric material, metal, metal alloy, or ceramic.

In an embodiment, the compressible second segment is made of a polymeric material which is compressible under the action of a compressing force. In an embodiment, the compressible second segment is made of a compressible polymeric material or any other polymeric material. In an embodiment, the compressible second segment is made of a combination of a compressible material and an incompressible material.

In an implementation, in a default state, when the load on the optical fiber cable is less than the predetermined load, the compressible second segment has an effective radius *r*₁ from a central axis of the housing to the surface of the second segment, thereby supporting the optical fiber cable at a spacing from the cutting edge of the first cutting element. When an external load is applied to the optical fiber cable which exceeds the predetermined load, the compressible second segment compress from a first resting uncompressed position to a second compressed position. In the first compressed position, the second compressible segment compresses downwards up to the point such that the cutting edge does not contact the cable. In the second compressed position, the second compressible segment further compressed downwards, such that the cutting edge makes contact with the cable and starts severing it. In an alternate embodiment, the compressible member is installed with an initial load, such that it does not compresses until the load exceeds the predetermined value.

This compression causes the compressible segment to reduce in shape and volume, which causes the fixed first cutting element to sever the optical fiber cable. In this compressed state, its effective radius is reduced to *r*₂, where *r*₂ < *r*₁, and the difference (*r*₁-*r*₂) represents the radial compression that brings the cable into engagement with the cutting edge of the first cutting element. In other embodiments, instead of a circular cross-section, the compressible second segment may have an elliptical, polygonal or irregular cross-section. In such embodiments, a radius or shortest distance from a reference centre to a cable-supporting surface, can be used in place of the radius, with a first value (e.g. *a*₁) in the uncompressed state and a second, smaller value (e.g. *a*₂) in the compressed state, where *a*₂ < *a*₁. In an embodiment, the difference (*a*₁-*a*₂) corresponds to the amount of compression and the associated cable movement toward the cutting edge.

In an embodiment, the clamp of the present invention further comprises at least a second cutting element. The second cutting element comprises a cutting edge. The cutting edge of the second cutting element is located opposite to the cutting edge of the first cutting element. A gap is defined between the cutting edge of the first cutting element and the cutting edge of the second cutting element. In an embodiment, the second cutting element is immovably affixed to the clamp housing. In an alternate embodiment, the second cutting element is movably affixed to the clamp housing. In an embodiment, when the external load on the optical fiber cable exceeds the predetermined load, the second cutting element movably affixed to the clamp housing moves from a first position to at least a section so as to interact with the optical fiber cable and sever it partially or completely.

In an embodiment, if there is any lateral offset between the cutting edge of the first cutting element and the cutting edge of the second cutting element, the offset is selected to be less than the radius of either cutting element so that the cable is reliably engaged between the cutting edges.

The constructional features of the clamp, such as size, material, etc. are made different depending on the type, size and material of the optical fiber cable used. The constructional features of the clamp are varied such that the predefined load that the optical fiber cable is severed by the cutting edge of at least the cutting element when the load on the optical fiber cable is equal to or greater than the predefined value.

In an embodiment, the first segment is rigidly fixed to a base portion of the housing, for example the first segment being moulded as a single piece with the housing. In an embodiment, the first segment may be rigidly fixed to a base portion of the housing by being fastened into the housing using screws or pins. In an embodiment, the first segment may include a slot or pocket in which the first cutting element is mounted and fixed in position. In an embodiment, the first segment may include a plurality of slots or pockets in which a plurality of the first cutting elements are mounted and fixed in position. In an embodiment, the cutting mechanism assembly may be fixedly mounted inside the housing by mechanical fasteners or integrally formed supports, such that the assembly is retained in a predefined position relative to the housing. In an embodiment, the first segment includes a recess configured to hold a compressible element. In an embodiment, the first segment includes a plurality of recess configured to hold a plurality of compressible elements or springs. In an embodiment, the second segment is mounted on the springs so that the springs are compressed between the first segment and the second segment when the second segment moves under load. In another embodiment, the housing may include structures that prevent rotation of the first segment, the second segment, and the spring, and keep these components correctly aligned with the inlet, the outlet, and the path of the optical fiber cable. In another embodiment, at least the first segment, the second segment, the compressible elements and the cutting elements are detachably secured within the housing to facilitate maintenance, inspection, or replacement.

Some examples of the clamp are, without limitations, wedge clamp, mandrel clamp, U-type clamp, anchor clamp, spiral clamp etc. In an example application, the clamp is coupled to a fixed support for the optical fiber cable, the optical fiber cable is routed through at least the first slot of the clamp. Further, the load on at least the first slot is a result of the tension on the optical fiber cable. In an embodiment, the clamp further comprises an attachment means through which the clamp is coupled to the fixed support. The attachment means comprises, without limitations, a cable, a hook, a clamp, etc.

In an embodiment, the optical fiber cable has a diameter in the range of 1-10mm. The optical fiber cable as disclosed herein is a conventional optical fiber cable. Generally, an optical fiber cable, for the purposes of the present invention, comprises one or more optical fibers, preferably an optical fiber. The optical fiber may be present in the form of Intermittently Bonded Ribbons (IBRs). One or more IBRs may be sheathed in one or more buffer tubes. The buffer tubes may be sheathed within a primary layer. The cable may comprise a secondary layer. The cable may comprise an armor layer. It is understood by a person skilled in the art that a variety of cable architectures may be used based on requirement, and which does not limit the scope of the invention.

While the preferred embodiments of the present disclosure have been described hereinabove, it may be appreciated that various changes, adaptations, and modifications may be made therein without departing from the spirit of the disclosure and the scope of the appended claims. It will be obvious to a person skilled in the art that the present disclosure may be embodied in other specific forms without departing from its spirit or essential characteristics. The described embodiments may be considered in all respects only as illustrative and not restrictive.

The present invention also provides a clamp for holding an optical fiber cable the clamp comprising a housing; at least a segment comprised within the housing, wherein the segment is configured to move relative to the housing upon an external load on the optical fiber cable exceeding a minimum value. The clamp also comprises a first cutting element, wherein at least a part of the said cutting element is affixed to the housing. The cutting edge of the cutting element is configured to interact with at least a part of the optical fiber cable when the external load on the optical fiber cable exceeds a predetermined load, and severs the optical fiber cable to relieve the external load.
In an embodiment, when an external force causes the external load on the optical fiber cable to exceed a predetermined load, this load is transmitted from the cable to the clamp. In an embodiment, the external force can be a tensile, compressive, bending or shear force, or any combination thereof. In an embodiment, when an external load on the optical fiber cable exceeds a predetermined load amount, the clamp causes the optical fiber cable to be severed. The constructional features of the clamp may be varied such that the optical fiber cable is severed when the load acting on the optical fiber cable is greater than the predetermined load. In an embodiment, the predetermined load is in the range of 800 N to 2000 N.

In an embodiment, the clamp comprises a single segment comprised within the housing. In an embodiment the segment is affixed to a base portion of the housing. In another embodiment, the segment comprises at least two or more discrete segments, collectively termed as the segment. In an embodiment, each of the two or more discrete segments may be affixed to the housing. In an embodiment, each of the two or more discrete segments may be affixed to each other. In yet another embodiment, at least one of two or more discrete segments may be affixed to the housing and at least one of two or more discrete segment may be affixed to each other.

In an embodiment, the segment is configured to move relative to the housing when an external load on the optical fiber cable exceeds a predetermined load. In an embodiment, the segment is compressible. In an embodiment, when the segment is a compressible segment, the compressible segment is configured to compress upon an external load on the optical fiber cable exceeding a predetermined load. In an embodiment, the compressible segment is configured to compress from a first resting uncompressed position to a second compressed position when the load on the optical fiber cable exceeds the predetermined load. In an embodiment, the compressible segment is made of a polymeric material.

In an embodiment, the clamp comprises at least a first cutting element. In an embodiment, at least a part of the first cutting element is affixed to at least a part of the housing. The first cutting element has at least a sharp edge, which is a cutting edge. The cutting edge is capable of severing the optical fiber cable. In an embodiment, a cutting edge of the first cutting element is configured to interact with at least a part of the optical fiber cable to sever the cable when the external load on the cable exceeds a predetermined load. In an embodiment, the housing and the segment together define a channel or slot in which the optical fiber cable is accommodated and through which it passes.

In an embodiment, the segment may be shaped as a hemi-sphere comprising a central hole, channel, or lumen region to accommodating the first cutting element. The movement or compression of the segment relative to the fixed cutting element may be described analogously to the above embodiments, for example in terms of changes in a radial distance or characteristic dimension between the cable-supporting surface of the segment and the cutting edge as load increases from the minimum value to the predetermined load.

In an embodiment, the segment is made of a polymeric material which is compressible under the action of a compressing force. In an embodiment, the segment is made of a compressible polymeric material or any other polymeric material. In an embodiment, the segment is made of a combination of a compressible material and an incompressible material.

In an implementation, in a default state, when the load on the optical fiber cable is less than the predetermined load, the segment has an effective radius *r*₁ from a central axis of the housing to the surface of the segment, thereby supporting the optical fiber cable at a spacing from the cutting edge of the first cutting element. When an external load is applied to the optical fiber cable which exceeds the predetermined load, the segment compress from a first resting uncompressed position to a second compressed position. This compression causes the compressible segment to reduce in shape and volume, which causes the fixed first cutting element to sever the optical fiber cable. In this compressed state, its effective radius is reduced to *r*₂, where *r*₂ < *r*₁, and the difference (*r*₁-*r*₂) represents the radial compression that brings the cable into engagement with the cutting edge of the first cutting element. In other embodiments, instead of a circular cross-section, the segment may have an elliptical, polygonal or irregular cross-section. In such embodiments, a radius or shortest distance from a reference centre to a cable-supporting surface of the segment, can be used in place of the radius, with a first value (e.g. *a*₁) in the uncompressed state and a second, smaller value (e.g. *a*₂) in the compressed state, where *a*₂ < *a*₁. In an embodiment, the difference (*a*₁-*a*₂) corresponds to the amount of compression and the associated cable movement toward the cutting edge.

In an embodiment, the optical fiber cable has a diameter in the range of 1-10mm. The optical fiber cable as disclosed herein is a conventional optical fiber cable. Generally, an optical fiber cable, for the purposes of the present invention, comprises one or more optical fibers, preferably a plurality of optical fibers. The plurality of optical fibers may be present in the form of Intermittently Bonded Ribbons (IBRs). One or more IBRs may be sheathed in one or more buffer tubes. The buffer tubes may be sheathed within a primary layer. The cable may comprise a secondary layer. The cable may comprise an armor layer. It is understood by a person skilled in the art that a variety of cable architectures may be used based on requirement, and which does not limit the scope of the invention.

While the preferred embodiments of the present disclosure have been described hereinabove, it may be appreciated that various changes, adaptations, and modifications may be made therein without departing from the spirit of the disclosure and the scope of the appended claims. It will be obvious to a person skilled in the art that the present disclosure may be embodied in other specific forms without departing from its spirit or essential characteristics. The described embodiments may be considered in all respects only as illustrative and not restrictive.

### EXAMPLES

Exemplary examples of the clamp of the present invention are described below, as illustrated in various drawings, in which the same reference numerals refer to the same parts throughout the different drawings.

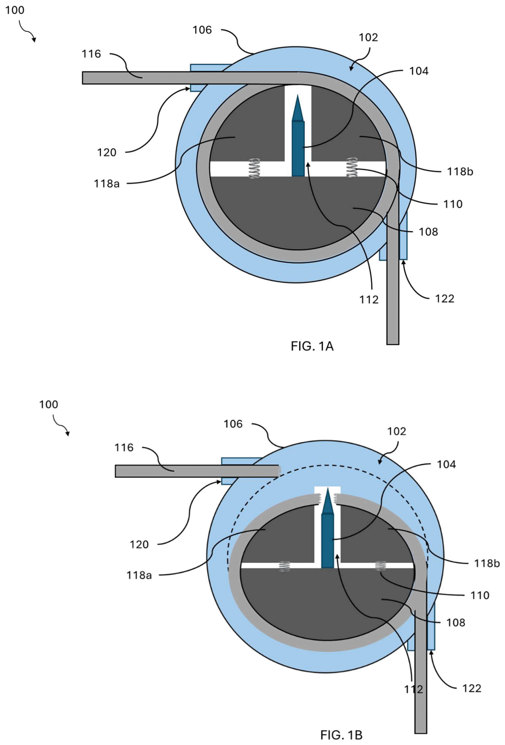

FIG. 1A illustrates a schematic view of a clamp (100) for suspension of an optical fiber cable (116) from a pole. As seen from FIG. 1A, the optical fiber cable (116) is routed into and out of the housing (106) via at least an inlet (120) and at least an outlet (122), which serve to removably affix and guide the cable (116). In an implementation, the clamp (100) is securely attached to a pole, mast, wall, or other fixed support (not shown) using a mounting element or attachment means (not shown), such as a hook, bracket, or cable loop. The clamp (100) comprises a housing (106), within which, the various structural features/ elements are housed. The cable (116) is accommodated within at least a first slot (102). The cable (116) after entering through the inlet (120), the optical fiber cable (116) is routed inside the housing (106) so as to loop around an internal portion of the clamp (100), thereby increasing the contact length between the cable (116) and the clamp (100), inducing friction, and improving transfer of tensile load from the cable (116) to the clamp (100), and then the cable (116) exits the housing (106) through the outlet (122). In an implementation, the cable (116) may further proceed to another pole (not shown) after exiting the outlet (122).

The housing comprises a first segment (108) configured as a rigid, stationary lower base that is immovably affixed to the housing (106). The first segment (108) can be molded from high-strength materials capable of withstanding up to 2000 N of force. In an implementation, there is provided a single first cutting element (104) with a cutting edge, whereby the cutting element (104) is fixedly attached to the first segment (108). In an implementation, the first cutting element (104) can be made of Mild Steel (MS) or Stainless Steel (SS). The clamp (100) further comprises second segment (118a, 118b). The second segment (118a, 118b) is movably affixed relative to the first segment (108) by compressible member (110), which can be comprised of one or more spring elements. The fixed first cutting element (104) extends into a channel (112) or lumen region defined by the adjacent surfaces of second segment (118a, 118b). Depending on the manufacturing implementation, the first (118a) and second (118b) second segments can be formed as two distinct, separate structural halves (as shown). The first cutting element (104) extends upward from the first segment (108) and is located in this channel/ lumen region defined between the second segments (118a, 118b).

In an implementation, under normal operating conditions, when the external load on the optical fiber cable (116) is below a threshold, the compressible member (110) remains in an uncompressed first position. In this uncompressed first position, the physical free space occupied by the compressible member (110) defines an initial longitudinal length and an initial inter-coil depth. In this case, the cutting edge of the first cutting element (104) does not physically interact with or damage the optical fiber cable (116).

FIG. 1B illustrates a schematic view of the clamp (100), when the external load on the optical fiber cable (116) exceeds a predetermined load amount. When read in conjunction with FIG. 1A, it can be seen and appreciated that the external load on the optical fiber cable (116) is transferred to the moveable second segments (118a, 11b), as a result of which, the compressible member (110) is compressed and the moveable second segments (118a, 118b) move towards the first segment (108). As a result, the cutting edge of the first cutting element (104) comes in contact with the optical fiber cable (116) and severs the optical fiber cable (116) completely, thus relieving the load on the clamp.

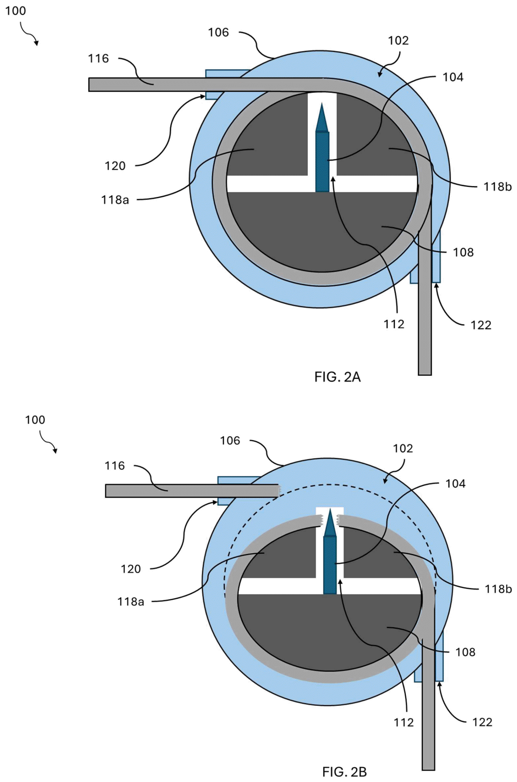

FIG. 2A illustrates a schematic view of a clamp (100), which is similar to FIG. 1A except that in FIG. 2A, the second element (118) is made of a compressible material and does not move relative to the first segment (108), and does not comprise any compressible member (110) as described in FIG. 1B.

FIG. 2B illustrates a schematic view of the clamp (100) of FIG. 2A when the external load on the optical fiber cable (116) exceeds a predetermined load amount. When read in conjunction with FIG. 2A, it can be seen and appreciated that the external load on the optical fiber cable (116) is transferred to the compressible second segments (118a, 11b), as a result of which, the compressible second segments (118a, 118b) are compressed. As a result, the cutting edge of the first cutting element (104) comes in contact with the optical fiber cable (116) and severs the optical fiber cable (116) completely, thus relieving the load on the clamp.

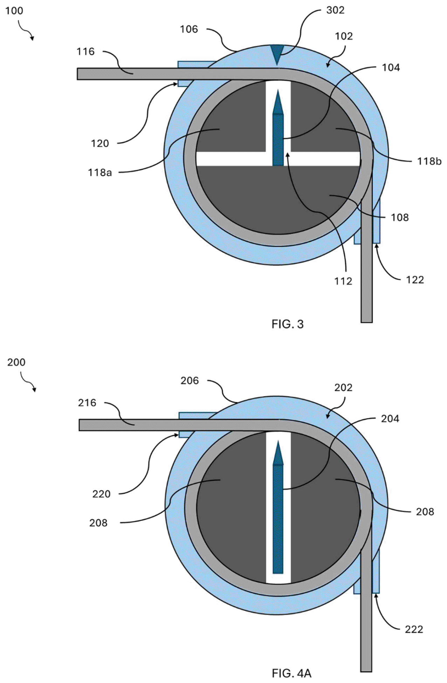

FIG. 3 illustrates a schematic view of the clamp (100), which is similar to FIG. 1A except that the clamp (100) of FIG. 3 further comprises a second cutting element (302) located substantially opposite the first cutting element (104). Similar to FIG. 1B, when the external load on the optical fiber cable (116) is transferred to the moveable second segments (118a, 11b), as a result of which, the compressible member (110) is compressed and the moveable second segments (118a, 118b) move towards the first segment (108). As a result, the cutting edge of the first cutting element (104) comes in contact with the optical fiber cable (116) and severs the optical fiber cable (116) completely, thus relieving the load on the clamp. Concurrently, the second cutting element (302), which is moveably affixed to the housing (106) of the clamp is also activated by a pressure sensitive mechanism to move from its default position to a second position to be closer to the first cutting element (104) to sever the optical fiber cable (116) in the same or a second position than the first cutting element (104).

FIG. 4A illustrates a schematic view of a clamp (200) for suspension of an optical fiber cable (216) from a pole. As seen from FIG. 4A, optical fiber cable (216) is routed into and out of the housing (206) via at least an inlet (220) and at least an outlet (222), which serve to removably affix and guide the cable (216). In an implementation, the clamp (200) is securely attached to a pole, mast, wall, or other fixed support (not shown) using a mounting element or attachment means (not shown), such as a hook, bracket, or cable loop. The clamp (200) comprises a housing (206), within which, the various structural features/ elements are housed. The cable (216) is accommodated within at least a first slot (202). The cable (216) after entering through the inlet (220), the optical fiber cable (216) is routed inside the housing (206) so as to loop around an internal portion of the clamp (200), thereby increasing the contact length between the cable (216) and the clamp (200), inducing friction, and improving transfer of tensile load from the cable (216) to the clamp (200), and then the cable (216) exits the housing (206) through the outlet (222). In an implementation, the cable (216) may further proceed to another pole (not shown) after exiting the outlet (222).

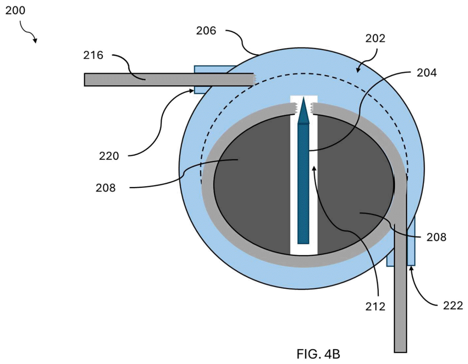

The housing (206) further comprises a first cutting element (204) affixed to the housing (206), wherein at least a part of the first cutting element (204) is affixed to the housing (206). In an implementation, the housing comprises a segment (208), configured to compress relative to the first cutting element (204) when an external load on the optical fiber cable (216) exceeds a minimum value. A cutting edge of the first cutting element (204) is configured to interact with at least a part of the optical fiber cable (216) to sever the cable (216) when the external load on the cable (216) exceeds a predetermined load. The housing (206) and the segment (208) together define a channel or slot (212) in which the optical fiber cable (216) is accommodated and through which it passes. The first cutting element (204) is fixed to a base of the housing (206) in a position such that, in a default condition, the cable (216) is spaced from the cutting edge. FIG. 4B illustrates a schematic view of the clamp (200), when the external load on the optical fiber cable (216) exceeds a predetermined load amount. When read in conjunction with FIG. 4A, it can be seen and appreciated that the external load on the optical fiber cable (216) is transferred to the segment (208) is compressed. This compression causes the segment (208) to reduce in shape and volume, resulting the compressible segment (208) and the optical fiber cable (216) move to towards the first cutting element (204). As a result, the cutting edge of the first cutting element (204) comes in contact with the optical fiber cable (216) to sever the optical fiber cable (216).The movement or compression of the segment relative to the fixed cutting element (204) may be described analogously to the above embodiments, for example in terms of changes in a radial distance or characteristic dimension between the cable-supporting surface of the segment and the cutting edge as load increases from the minimum value to the predetermined load.

### ADVANTAGES OF THE PRESENT INVENTION

The present invention provides a novel clamp fixture that ensures that when an external load on an optical fiber cable exceeds a threshold value, which can otherwise damage the infrastructure on which the optical fiber cable is located, such as a pole, the clamp ensures that the cable is severed, so as to relieve the load on the cable, and consequently mitigate the risk of damage to the infrastructure.

### LIST OF REFERENCE NUMERALS

- 100: Clamp
- 102: First Slot
- 104: First Cutting Element
- 106: Housing
- 108: First Segment
- 110: Compressible Member
- 112: Lumen Region
- 116: Optical Fiber Cable
- 118: Second Segment
- 120: Inlet
- 122: Outlet
- 200: Clamp
- 202: First Slot
- 204: First Cutting Element
- 206: Housing
- 208: Segment
- 212: Lumen Region
- 216: Optical Fiber Cable
- 220: Inlet
- 222: Outlet
- 302: Second cutting element

## Claims

1. A clamp (100) for holding an optical fiber cable (116), comprising:
- a housing (106);
- at least a first segment (108) comprised within the housing (106), wherein the first segment (108) is immovably affixed to the housing (106),
- at least a first cutting element (104), wherein at least a part of the first cutting element (104) is affixed to the first segment (108); and
- at least a second segment (118) comprised within the housing (106), wherein the second segment (118) is moveably affixed to the first segment (108); or wherein the second segment (118) is a compressible second segment configured to compress under a predetermined load,
wherein the cutting edge of the first cutting element (104) interacts with at least a part of the optical fiber cable (116) to sever the optical fiber cable (116) upon an external load on the optical fiber cable (116) exceeding a predetermined load.

2. The clamp (100) as claimed in claim 1, wherein the first cutting element (104) is fixedly located in a lumen region defined between a first part (118a) and a second part (118b) of the second segment (118), and wherein the first part (118a) and second part (118b) of the second segment (118) is adjacent to each other.

3. The clamp (100) as claimed in claim 1, wherein at least the second segment (118) is movably affixed to the first segment (108) by at least a compressible member (110).

4. The clamp (100) as claimed in claim 3, wherein the compressible member (110) is a spring element.

5. The clamp (100) as claimed in claim 4, wherein the compressible member (110) has an equivalent spring constant (keq) in the range 45,000 N/m to 800,000 N/m.

6. The clamp (100) as claimed in claim 3, wherein the compressible member (110) is configured to move from an uncompressed position to at least a first compressed position when a load on the optical fiber cable (116) is applied, such that the load does not exceed the predetermined value; wherein the compressible member (110) is configured to move from the first compressed position to a second compressed position when the load on the optical fiber cable (116) exceeds the predetermined value.

7. The clamp (100) as claimed in claim 1, wherein the compressible second segment (118) is made of a polymeric material.

8. The clamp (100) as claimed in claim 1, wherein the predetermined load is in the range of 800 to 2000 N.

9. The clamp (100) as claimed in claim 1, comprising a mounting structure to mount the clamp (100) to a pole.

10. The clamp (100) as claimed in claim 1, comprising at least a second cutting element (302) having at least a cutting edge, wherein the cutting edge is located opposite to the cutting edge of the first cutting element (104), and wherein the second cutting element (302) is movably affixed to the housing (106).

11. The clamp (100) as claimed in claim 1, comprising at least an inlet (120) and at least an outlet (122) to removably affix the optical fiber cable to the clamp (100).

12. A clamp (200) for holding an optical fiber cable (216), comprising:
a housing (206);
a segment (208) comprised within the housing (206); and
at least a first cutting element (204), wherein at least a part of the first cutting element (204) is affixed to the housing (206);
wherein a cutting edge of the first cutting element (204) is configured to interact with at least a part of the optical fiber cable (216) to sever the optical fiber cable (216) when the external load on the optical fiber cable (216) exceeds a predetermined load.

13. The clamp (200) as claimed in claim 12, wherein the segment (208) is configured to move relative to the first cutting element (204) upon an external load on the optical fiber cable (216) exceeding a predetermined load.

14. The clamp (200) as claimed in claim 12, wherein the segment (208) is a compressible segment configured to compress upon an external load on the optical fiber cable (216) exceeding a predetermined load, wherein the compressible segment is configured to compress from a first resting uncompressed position to a second compressed position when the load on the optical fiber cable (216) exceeds the predetermined load.

15. The clamp (200) as claimed in claim 14, wherein the compressible segment is made of a polymeric material.
